## Europäisches Patentamt
## European Patent Office
## Office européen des brevets

(11) Publication number: **0 019 986**
**B1**

---

(12) # EUROPEAN PATENT SPECIFICATION

(45) Date of publication of patent specification: **27.10.82**

(51) Int. Cl.³: **G 03 B 17/26**

(21) Application number: **80200635.3**

(22) Date of filing: **03.08.79**

(60) Publication number of the earlier application in accordance with Art. 76 EPC: **0011678**

---

(54) **Photographic film cartridge assembly.**

---

(43) Date of publication of application:
**10.12.80 Bulletin 80/25**

(45) Publication of the grant of the patent:
**27.10.82 Bulletin 82/43**

(84) Designated Contracting States:
**AT BE CH DE FR IT NL SE**

(56) References cited:
**CH - A - 222 819**
**CH - A - 359 023**
**CH - A - 359 024**
**GB - A - 225 115**

(73) Proprietor: **EASTMAN KODAK COMPANY**
**343 State Street**
**Rochester, New York 14650 (US)**

(72) Inventor: **Harvey, Frederick W.**
**Kodak Park**
**Rochester, New York (US)**
Inventor: **Sethi, Gurdip S.**
**Kodak Park**
**Rochester, New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Photographic film cartridge assembly

The present invention relates to photographic film cartridge assemblies of the type including a disk shaped film unit rotatably mounted in a casing.

DT—OS 28 09 856 to Harvey discloses a photographic film cartridge assembly having a film disk mounted in a casing for rotation past an exposure window. A cover member protects the exposure window when the cartridge is outside of a camera and is movable between exposure window covering and uncovering positions.

The Harvey cartridge assembly has a lock preventing rotation of the cover member to the uncovering position when the cartridge assembly is outside a camera. The lock is releasable by a camera pin when the cartridge assembly is inserted in a camera, thereby permitting rotation of the cover member.

The Harvey patent application recognizes the desirability of a lock on the film disk. Because the cover member and the film disk in the Harvey disclosure are both fixed to a rigid core, the one releasable lock also prevents movement of the film disk. Therefore, only one release structure need be incorporated into the camera to unlock both structures. However, fixing the cover member to the core prevents a film disk from being exposed in the area behind the cover member. To expose the area of a film disk behind the cover member, the cover member must be movable relative to the film disk as in other prior structures, see U.S. Patent 1,410,029, Niell.

Although an overrideable detent inhibiting movement of the film disk could be used, the extra resistance would be objectionable especially if an electric motor drive camera is used. Since even in such electric drive cameras, movement of the cover member is likely to be accomplished manually, a detent on the cover member, while not ideal, would be less objectionable.

It is the object of this invention to provide a releasable locking mechanism for a film disk in a cartridge assembly which cartridge assembly has a separately movable cover member and which locking mechanism does not require a camera release structure separate from whatever camera structure permits or causes movement of the cover member.

This object is accomplished by a lock preventing movement of the film disk in at least one direction relative to the exposure window when the cover member is in its exposure window covering position, which lock is releasable in response to movement of the cover member toward its uncovering position.

According to a preferred embodiment, the cartridge assembly includes a separator layer between the film disk and the cover member. The lock is a pawl fixed to the cover member and extending into a discontinuity in the film disk through a hole in the separator layer. Movement of the cover member toward its uncovering position moves the pawl to a position out of alignment with the hole, in which position the pawl is prevented by the separator layer from engaging a discontinuity, thereby permitting rotation of the film disk.

In the detailed description of the preferred embodiments of the invention presented below, reference is made to the accompanying drawings in which:

Fig. 1 is an exploded perspective view of an unassembled photographic cartridge assembly in which the present invention can be used.

Figs. 2—4 are enlarged views of details of the photographic cartridge assembly of Fig. 1;

Fig. 5 is an exploded perspective view of a film unit, separator layer and cover member illustrating the film disk locking structure for the cartridge assembly shown in Fig. 1.

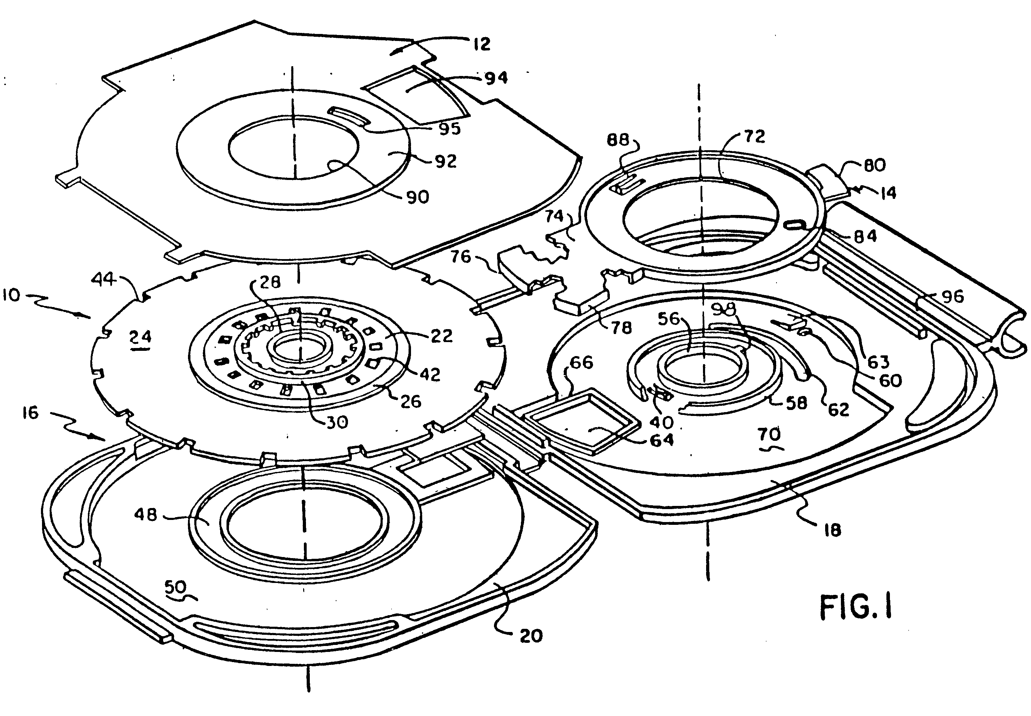

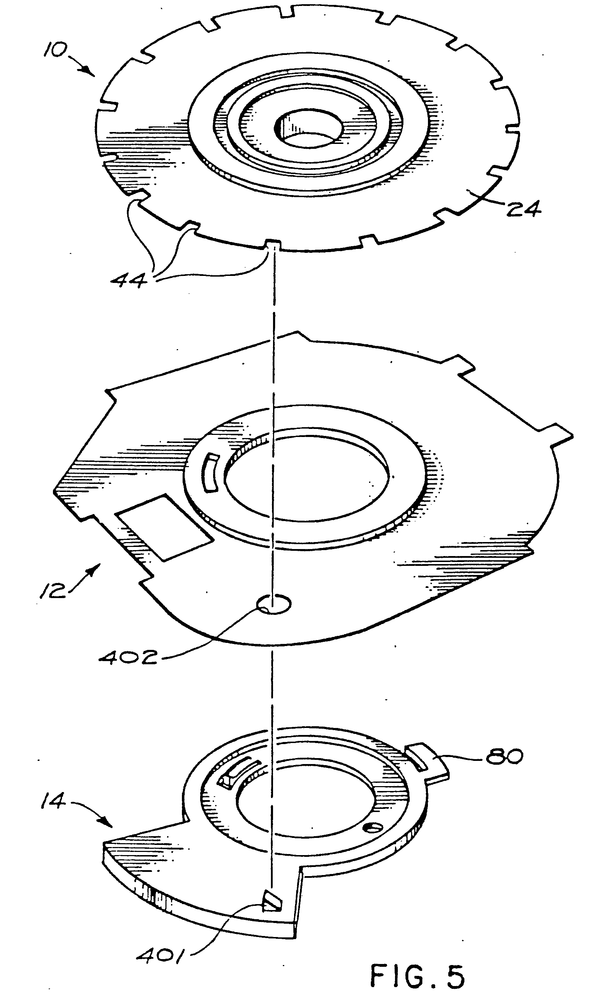

The invention is illustrated in Fig. 5. However, Figs. 1—4, which do not show the invention, are used to described generally a cartridge assembly in which the invention can be used. A cartridge assembly according to Figs. 1—4 is subject of co-pending patent application EP 79 102 786.5.

The cartridge assembly, shown in exploded perspective in Fig. 1 includes a disk shaped film unit 10, a separator layer 12, a cover member 14, and a casing 16 with top and bottom parts 18 and 20, respectively. When assembled, the top and bottom parts 18 and 20 of the casing form walls which enclose the film unit, the separator layer and the cover member.

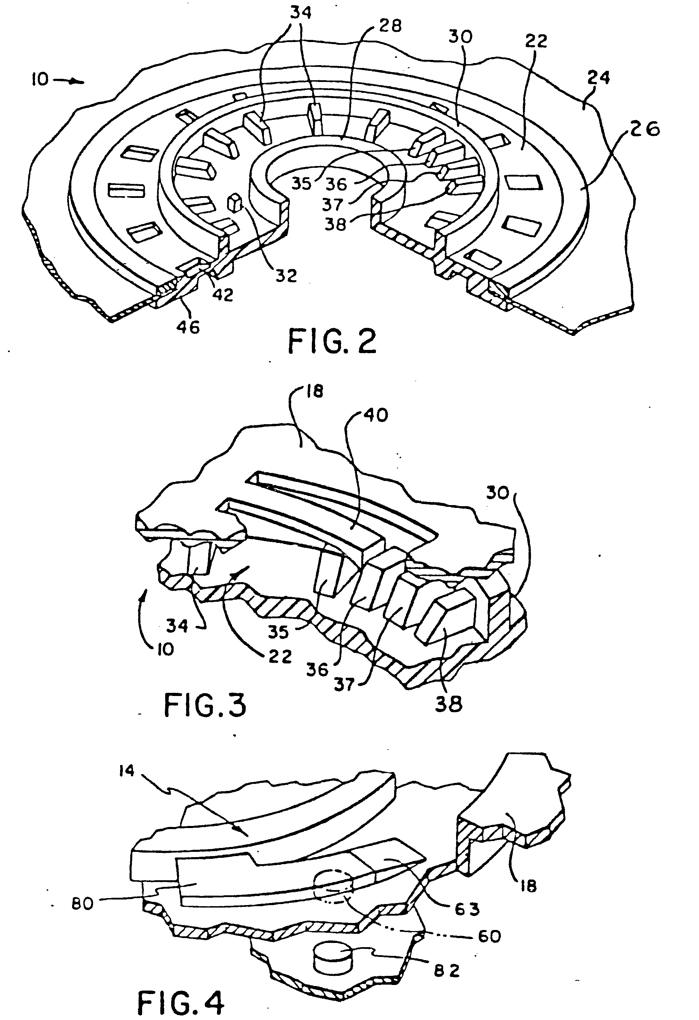

The film unit 10, shown enlarged and in partial section in Fig. 2, includes a rigid core 22, a photographic film disk 24, and a mounting ring 26. The film disk is illustrated as having a generally circular outer perimeter, but other non-circular (e.g. polygonal) shapes, such as hexagonal or octagonal may be used.

The film disk 24, comprises a moderately flexible but self-supporting base sheet formed of, for example, cellulose acetate or polyethylene terephthalate) and carries photosensitive layers on a face thereof. It is constructed to record photographic images in a plurality of image areas which are spaced along an annular exposure region concentric with the film unit axis. The image areas can be defined by surrounding borders which have been photographically pre-exposed.

The core 22 is preferably molded of a plastics material and includes an inner raised ring 28, surrounding a central opening, and an outer raised ring 30.

According to Figs. 2 and 3, a plurality of widely spaced teeth 34 and closely spaced upstanding teeth 35—38 are located radially inwardly from outer raised ring 30. These teeth cooperate with a ratchet pawl 40 (shown in Fig. 1 and detailed in Fig. 3) on the casing top part 18 in a manner disclosed hereinafter to inhibit rotation of the film unit 10 in other than one desired direction.

A plurality of equally circumferentially spaced discontinuities in the form of recesses 42 are provided in the core 22 radially outwardly of the ring 30 for receiving a force tending to rotate the film unit 10. The perimeter of the film disk 24 contains a series of arcuately spaced positioning discontinuities for example, notches 44 for use in termination of the indexing function and accurate positioning of each image area.

An annular projection 46 (Fig. 2) of the core 22 rotatably rides in a groove 48 (Fig. 1) in the casing bottom part 20. The film disk 24 projects radially outwardly from the core 22 and lies in an annular recess 50 in the casing bottom part.

Referring now to the casing top part 18, an annular wall 56 extends around a central opening and a second annular wall 58 is spaced radially outwardly from wall 56. The top part includes the aforementioned ratchet pawl 40, two apertures 60 and 62, a tooth 63, an exposure window 64, a rib 66 surrounding exposure window 64, and a recess 70.

The cover member 14 has a central opening 72 sized to receive annular wall 58 of casing top part 18 so that the cover member can rotate about the axis of the annular wall. The cover member is formed of suitably thin but relatively stiff opaque sheet plastics material and includes a generally fan-shaped leaf portion 74 sized to cover the exposure window 64. The passage of light rays through the exposure window 64 and onto photosensitive film disk 24 when the cartridge assembly is not protectively encased by a camera is precluded by means of the leaf portion 74 and the separator layer 12. Lips 76 and 78 extend over portions of rib 66 to form a light baffle.

A locking mechanism for preventing inadvertent rotation of the cover member when the cartridge assembly is not in a camera includes a tab 80 (detailed in Fig. 4) on the cover member. The tab is aligned with the aperture 60 and engages the tooth 63 of the casing top part when the leaf portion 74 is aligned with the exposure window 64. The tab 80 is depressable by a camera pin 82 to disable the locking mechanism when the cartridge assembly is received in a camera.

Another discontinuity, illustrated as a hole 84 in cover member 14, is aligned with the aperture 62 and is engageable by a camera indexing mechanism for rotating the cover member. A ratchet pawl 88 extends from the cover member 14 toward the core 22 and is aligned with the recesses 42 on the core. The pawl 88 is an engaging structure associated with the cover member 14 which cooperates with the recesses 42, to rotate the film unit 10 in response to reciprocative rotation of the cover member 14 on a path about the annular wall 58.

The separator layer 12 is formed of an opaque sheet material and has a central aperture 90 sized to admit the outer ring 30 of the core 22 and to conform to the inside diameter of the annular wall 58 of the casing top part. A recess 92 in the separator layer 12 receives the core 22, and a window 94 is aligned with exposure window 64. An aperture 95 is aligned with recesses 42 on the core 22.

Before the cartridge assembly is loaded into a camera, cover member 14 is held against rotation in one direction in casing 16 by engagement of lip 78 and rib 66, and in the other direction by tab 80 engaging tooth 63. Rotation of film disk 24, in casing 16 in one direction (counterclockwise in Fig. 1) is inhibited by pawl 40 on casing top part 18 lying between closely spaced teeth 35 and 36 as shown in Fig. 3. Alternatively, an antibackup pawl can be molded into separator layer 12 or casing bottom part 20 to engage the positioning discontinuities at a position on the periphery of disk 24 remote from the exposure window 64.

Movement in a clockwise direction (Fig. 1) is prevented by an initial locking structure for the film disk 24. This structure is illustrated in Fig. 5, where the rotational direction of the film disk 24 is reversed from Fig. 1. Prior to the insertion into a camera for the first exposure, movement in one direction is prevented by engagement between post 98 (Fig. 1) and post 32 (Fig. 2) and possibly one of the antibackup structures mentioned above. An initial lock pawl 401 molded into cover member 14 extends through a hole 402 in separator layer 12 to engage a positioning discontinuity 44 to prevent movement in the other direction. When the tab 80 is depressed to unlock the cover member and the cover member is moved (counterclockwise as shown in Fig. 5), the pawl 401 moves out of hole 402 and is prevented from engaging discontinuity 44 by separator layer 102. Film disk 24 is now free to move in one direction.

This structure has the important advantage of providing a positive lock on the film disk which cannot be overcome by manual turning of the core when the cartridge is outside the camera. It also is totally released prior to film unit advance which reduces the torque necessary to begin rotation of the film disk. This feature had broader application than use in cartridge assemblies in which film units are driven by the cover member. It also can be used with a cartridge assembly in which the film unit is driven directly by the camera.

Upon completion of exposure of the film disk 24 or at any intermediate position, the cover member 14 can be moved to its covering position. The cartridge assembly may now be removed from the camera, whereupon tab 80 abuts tooth 63 on casing top part 18 to inhibit inadvertent rotation of cover member 14 while the cartridge assembly is out of the camera.

With any of the embodiments, complexity in the cartridge assembly does not generally add substantial cost, because the core, cover member and casing are all made of plastic in which pawls and discontinuities can be readily molded or otherwise formed.

**Claims**

1. Photographic film cartridge assembly with a substantially light tight casing (16) including two opposing walls, one wall having an exposure window (64), a film disk (24) situated between the opposing walls and rotatable to present successive image areas of the film disk (24) to the exposure window (64), a cover member (14) movable along a path which includes a position in which it covers the exposure window (64) and a position in which it uncovers the exposure window (64), characterized by a lock (401) preventing movement of the film disk (24) in at least one direction relative to the exposure window (64) when the cover member (14) is in its covering position, which lock (401) is releasable in response to movement of the cover member (14) toward its uncovering position.

2. Cartridge assembly according to Claim 1, characterized in that the film disk (24) has discontinuities (44) on its periphery and said lock is a pawl (401) fixed to the cover member (14) which pawl is engageable with one of said discontinuities (44) to prevent movement of the film disk (24).

3. Photographic film cartridge assembly with a substantially light tight casing (16) including two opposing walls, one wall having an exposure window (64), a film disk (24) situated between the opposing walls and rotatable to present successive image areas of the film disk (24) to the exposure window (64), a cover member (14) movable along a path which includes a position in which it covers the exposure window (64) and a position in which it uncovers the exposure window (64) and a separator layer (12) positioned between the film disk (24) and the cover member (14), characterized in that the film disk (24) has discontinuities (44) on its periphery and said cover member (14) includes a pawl (401) engageable with one of said discontinuities (44) through a hole (402) in the separator layer (12) to prevent movement of the film disk (24) in at least one direction when the cover member (14) is in its exposure window covering position, said pawl (401) being movable with said cover member (14) to a position out of alignment with the hole (402) when the cover member (14) moves to its exposure window uncovering position, in which position the pawl (401) is prevented by the separator layer (12) from engaging a discontinuity (44).

4. Cartridge assembly according to Claim 1, 2 or 3, characterized by a releasable lock (63, 80) preventing movement of the cover member (14) in its covering position when said cartridge assembly is outside a camera.

5. Cartridge assembly according to Claim 2, 3, or 4, characterized in that said pawl (401) is shaped to prevent rotation of said film disk (24) in only one direction and in that the cartridge assembly further includes nonreleasable means (40) for preventing rotation of the film disk in the opposite direction.

6. Cartridge assembly according to Claim 5 further characterized in that the nonreleasable means is an anti-backup pawl positioned to engage a discontinuity (44) on the periphery of the film disk (24).

**Revendications**

1. Chargeur de film photographique avec un étui (16) effectivement étanche à la lumière comprenant deux parois opposées dont l'une est munie d'une fenêtre d'exposition (64), un disque de pellicule (24) disposé entre les parois opposées et susceptible de tourner de manière à présenter des plages images successives du disque (24) à la fenêtre d'exposition (64), un volet protecteur (14) pouvant être déplacé suivant une trajectoire qui comprend une position où il occulte la fenêtre d'exposition (64) et une position dans laquelle il démasque cette fenêtre d'exposition (64), caractérisé par un verrou (401) interdisant le déplacement du disque de pellicule (24) dans au moins un sens par rapport à la fenêtre d'exposition (64) quand le volet protecteur (14) est dans sa position d'occultation, ce verrou (401) étant apte à être neutralisé à la suite d'un déplacement du volet protecteur (14) vers sa position de démasquage.

2. Chargeur conforme à la revendication 1, caractérisé en ce que le disque de pellicule (24) présente des discontinuités (44) à sa périphérie et en ce que ce verrou est un cliquet (401) fixé au volet protecteur (14), ce cliquet pouvant venir au contact de l'une des discontinuités (44) pour interdire un déplacement du disque de pellicule (24).

3. Chargeur de film photographique avec un étui (16) effectivement étanche à la lumière comprenant deux parois opposées dont l'une est munie d'une fenêtre d'exposition (64), un disque de pellicule (24) disposé entre les parois opposées et susceptible de tourner de manière à présenter des plages images successives du disque de pellicule (24) à la fenêtre d'exposition (64), un volet protecteur (14) pouvant être déplacé suivant une trajectoire qui comprend une position où il occulte la fenêtre d'exposition (64) et une position dans laquelle il démasque la fenêtre d'exposition (64) et une membrane séparatrice (12) placée entre le disque de pellicule (24) et le volet protecteur (14), caractérisé en ce que le disque de pellicule (24) présente des discontinuités (44) à sa périphérie et en ce que le volet protecteur (14) porte un cliquet (401) susceptible de venir au contact de l'une de ces discontinuités (44) au travers d'un ajour (402) dans la membrane séparatrice (12) pour interdire un déplacement du disque de pellicule (24) dans au moins un sens quand le volet protecteur (14) est dans sa position d'occultation, ce cliquet (401) étant mobile avec ce volet protecteur vers une position où il n'est pas aligné avec l'ajour (402) quand le volet protecteur (14) se déplace vers sa position de démasquage, position dans laquelle le cliquet (401) est empêché de venir au contact d'une discontinuité (44) par la membrane séparatrice (12).

4. Chargeur conforme à l'une quelconque des revendications 1, 2 ou 3, caractérisé par un verrou neutralisable (63, 80) interdisant un déplacement du volet protecteur (14) dans sa position d'occultation lorsque le chargeur est hors d'un appareil de prise de vues.

5. Chargeur conforme à l'une quelconque des revendications 2, 3 ou 4, caractérisé en ce que le cliquet (401) est configuré pour interdire la rotation du disque de pellicule (24) dans un sens seulement et en ce que le chargeur comprend en outre un moyen (40) non-neutralisable pour empêche la rotation du disque de pellicule dans le sens opposé.

6. Chargeur conforme à la revendication 5 caractérisé en ce que le moyen non-neutralisable est un cliquet anti-retour disposé pour venir au contact d'une discontinuité (44) de la périphérie du disque de pellicule (24).

## Patentansprüche

1. Photographische Filmkassette mit einer im wesentlichen lichtundurchlässigen Umhüllung (16) mit zwei einander gegenüberliegenden Wänden, von denen eine Wand ein Belichtungsfenster (64) aufweist, mit einer Filmscheibe (24), die zwischen den beiden einander gegenüberliegenden, Wänden angeordnet und so drehbar ist, daß aufeinanderfolgende Bildfelder der Filmscheibe (24) in den Bereich des Belichtungsfensters (64) gelangen, mit einem Abdeckelement (14), das über eine Bahn bewegbar ist, die eine Stellung einschließt, in der es das Belichtungsfenster (64) abdeckt, sowie eine Stellung, in der es das Belichtungsfenster (64) freigibt, gekennzeichnet durch eine Verriegelung (401), welche eine Bewegung der Filmscheibe (24) in mindestens einer Richtung relativ zu dem Belichtungsfenster (64) verhindert, wenn sich das Abdeckelement (14) in Abdeckstellung befindet, wobei die Verriegelung (401) in Abhängigkeit von der Bewegung des Abdeckelements (14) in die das Belichtungsfenster freigebende Stellung lösbar ist.

2. Kassette nach Anspruch 1, dadurch gekennzeichnet, daß die Filmscheibe (24) an ihrer Umfangslinie Unterbrechungen (44) aufweist und die Verriegelung eine an dem Abdeckelement (14) befestigte Klinke (401) ist, die mit einer der Unterbrechungen (44) in Eingriff gebracht werden kann, um eine Bewegung der Filmscheibe (24) zu verhindern.

3. Photographische Filmkassette mit einer im wesentlichen lichtundurchlässigen Umhüllung (16) mit zwei einander gegenüberliegenden Wänden, von denen eine Wand ein Belichtungsfenster (64) aufweist, mit einer Filmscheibe (24), die zwischen den beiden einander gegenüberliegenden Wänden angeordnet und so drehbar ist, daß aufeinanderfolgende Bildfelder der Filmscheibe (24) in den Bereich des Belichtungsfensters (64) gelangen, mit einem Abdeckelement (14), das uber eine Bahn bewegbar ist, die eine Stellung einschließt, in der es das Belichtungsfenster (64) abdeckt, sowie eine Stellung, in der es das Belichtungsfenster (64) freigibt, und mit einer zwischen der Filmscheibe (24) und dem abdeckelement (14) angeordneten Trennschicht (12), dadurch gekennzeichnet, daß die Filmscheibe (24) an ihrer Umfangslinie Unterbrechungen (44) hat und das Abdeckelement (14) eine Klinke (401) aufweist, die durch ein Loch (402) in der Trennschicht (12) mit einer der Unterbrechungen (44) in Eingriff gebracht werden kann, um eine Bewegung der Filmscheibe (24) in mindestens einer Richtung zu verhindern, wenn sich das Abdeckelement (14) in Abdeckstellung befindet, wobei die Klinke (401) zusammen mit dem Abdeckelement (14) in eine Stellung bewegbar ist, in der sie mit dem Loch (402) nicht fluchtet, wenn sich das Abdeckelement (14) in die das Belichtungsfenster freigebende Stellung bewegt, und in der sie durch die Trennschicht (12) daran gehindert wird, mit einer Unterbrechung (44) in Eingriff zu gelangen.

4. Kassette nach den Ansprüchen 1, 2 oder 3, gekennzeichnet durch eine Lösbare Verriegelung (63, 80), die eine Bewegung des Abdeckelements (14) in der Abdeckstellung verhindert, wenn sich die Kassette außerhalb einer Kamera befindet.

5. Kassette nach den Ansprüchen 2, 3 oder 4, dadurch gekennzeichnet daß die Klinke (401) so ausgebildet ist, daß sie eine Drehung der Filmscheibe (24) nur in einer Richtung verhindert, und daß die Kassette außerdem nicht lösbare Mittel (40) aufweist, die eine Drehung der Filmscheibe in der entgegengesetzten Richtung verhindern.

6. Kassette nach Anspruch 6, weiterhin dadurch gekennzeichnet, daß es sich bei den nicht lösbaren Mitteln um eine Rücklaufsperrklinke handelt, die so angeordnet ist, daß sie in eine Unterbrechung (44) in der Umfangslinie der Filmscheibe (24) eingreift.

FIG.1

FIG. 2

FIG. 3

FIG. 4

0019986

10

24

44

12

402

14

80

401

FIG.5

3